# EUROPEAN PATENT APPLICATION

(11) **EP 3 901 760 A1**
(43) Date of publication of application: **27.10.2021**
(21) Application number: 21190533.6
(22) Date of filing: 10.08.2021
(51) Int. Cl.: G06F 8/36, G06F 8/71, G06F 11/36

(54) **DATA PROCESSING METHOD AND APPARATUS, ELECTRONIC DEVICE, STORAGE MEDIUM AND PROGRAM PRODUCT**

(30) Priority: 21.12.2020 CN 202011521747
(71) Applicant: Beijing Baidu Netcom Science and Technology Co., Ltd., Beijing 100085 (CN)
(72) Inventor: TIAN, Shuo, BEIJING, 100085 (CN); LUO, Tao, BEIJING, 100085 (CN); NING, Zhefeng, BEIJING, 100085 (CN); LAN, Xiang, BEIJING, 100085 (CN); YU, Dianhai, BEIJING, 100085 (CN); MA, Yanjun, BEIJING, 100085 (CN)
(74) Representative: Viering, Jentschura & Partner mbB Patent- und Rechtsanwälte

(57) **Abstract**

The present disclosure provides a data processing method and apparatus, an electronic device, a computer storage medium and a program product, and relates to the field of artificial intelligence such as deep learning and big data. The method includes: extracting, in submission information of a current test task, a first sub-directory in which a dependent package required for constructing a model is located; and obtaining the dependent package from a local storage module, in a case where the first sub-directory is as same as a second sub-directory in submission information for a historical test task. Embodiments of the present disclosure can increase efficiency of acquiring the dependent package and further increase execution efficiency of a process for constructing models according to the dependent package.

## Description

### TECHNICAL FIELD

The present disclosure relates to the technical field of computers, and more particularly relates to the field of artificial intelligence such as deep learning and big data.

### BACKGROUND

With the development of computer technologies, intelligence degrees of the computer technologies are increasingly higher. A computer model is often one of essential tools for realizing the intelligent computer technologies. A computer simulation model refers to a powerful conceptual mode that realizes some rules or regulations in an objective system by programs and runs at high speed by setting a certain environment within a computer, utilizing capacity of the computer for processing a large amount of information at high speed, so as to observe and predict situations of the objective system.

The computer models may include a deep learning model, a machine learning model, etc. These models need to be constructed before use. Since the computer model technology is in rapid development, some identical dependent packages will be often used in construction processes of different computer models. The dependent packages include some data required for construction of the computer models. Improvement of the computer model construction technology involves optimization of the models themselves, and the model construction speed is also an improvement and optimization direction.

### SUMMARY

The present disclosure provides a data processing method and apparatus, a device and a storage medium.

According to one aspect of the present disclosure, there is provided a data processing method, which may include:
extracting a first sub-directory in which a dependent package required for constructing a model is located, based on a current test task;
comparing the first sub-directory with a second sub-directory corresponding to a historical test task; and
obtaining the dependent package from a local storage module, based on a first comparison result, wherein the first comparison result is that the first sub-directory is as same as the second sub-directory.

According to another aspect of the present disclosure, there is provided a data processing apparatus, which include:
a first sub-directory extracting module configured for extracting a first sub-directory in which a dependent package required for constructing a model is located, based on a current test task;
a comparing module configured for comparing the first sub-directory with a second sub-directory corresponding to a historical test task; and
a first obtaining module configured for obtaining the dependent package from a local storage module, based on a first comparison result, wherein the first comparison result is that the first sub-directory is as same as the second sub-directory.

According to another aspect of the present disclosure, there is provided an electronic device, which include:
at least one processor; and
a memory communicatively connected with the at least one processor, wherein
the memory stores instructions executable by the at least one processor, the instructions being executed by the at least one processor to enable the at least one processor to perform the method provided by any one of the embodiments of the present disclosure.

According to another aspect of the present disclosure, there is provided a non-transient computer-readable storage medium storing computer instructions for enabling a computer to perform the method provided by any one of the embodiments of the present disclosure.

According to another aspect of the present disclosure, there is provided a computer program product comprising computer instructions which, when executed by a processor, cause the processor to perform the method provided by any one of the embodiments of the present disclosure.

According to the technologies in the present disclosure, the dependent package required for constructing a model can be acquired at a higher speed, so that efficiency of the process for constructing the model according to the dependent package obtained by the embodiments of the present disclosure is increased.

It should be understood that the content described in this section is neither intended to limit the key or important features of the embodiments of the present disclosure, nor intended to limit the scope of the present disclosure. Other features of the present disclosure will be readily understood through the following description.

### BRIEF DESCRIPTION OF THE DRAWINGS

The drawings are used to better understand the scheme and do not constitute a limitation to the present disclosure. In which:
FIG. 1 is a schematic diagram of a data processing method according to one embodiment of the present disclosure;
FIG. 2 is a schematic diagram of a data processing method according to another embodiment of the present disclosure;
FIG. 3 is a schematic diagram of a data processing method according to one example of the present disclosure;
FIG. 4 is a schematic diagram of a data processing method according to another example of the present disclosure;
FIG. 5 is a schematic diagram of a data processing apparatus according to one embodiment of the present disclosure;
FIG. 6 is a schematic diagram of a data processing apparatus according to another embodiment of the present disclosure;
FIG. 7 is a schematic diagram of a data processing apparatus according to another embodiment of the present disclosure;
FIG. 8 is a schematic diagram of a data processing apparatus according to another embodiment of the present disclosure;
FIG. 9 is a schematic diagram of a data processing apparatus according to another embodiment of the present disclosure;
FIG. 10 is a schematic diagram of a data processing apparatus according to another embodiment of the present disclosure; and
FIG. 11 is a schematic block diagram of an illustrative electronic device that may be used for implementing the embodiments of the present disclosure.

### DETAILED DESCRIPTION

Exemplary embodiments of the present disclosure are described below in combination with the drawings, including various details of the embodiments of the present disclosure to facilitate understanding, which should be considered as exemplary only. Thus, those of ordinary skill in the art should realize that various changes and modifications can be made to the embodiments described here without departing from the scope and spirit of the present disclosure. Likewise, descriptions of well-known functions and structures are omitted in the following description for clarity and conciseness.

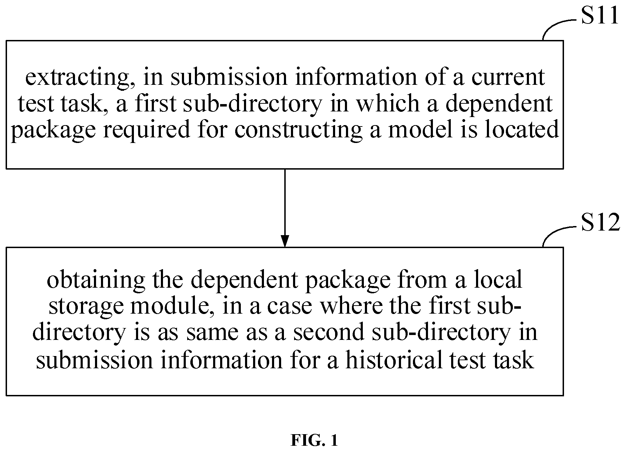

An embodiment of the present disclosure first provide a data processing method. As shown in FIG. 1, the method may include:
S11: extracting, in submission information of a current test task, a first sub-directory in which a dependent package required for constructing a model is located; and
S12: obtaining the dependent package from a local storage module, in a case where the first sub-directory is as same as a second sub-directory in submission information for a historical test task.

In the embodiment of the present disclosure, the test task may be a continuous integration task, may be a task executed locally by a terminal submitting a task, or may be a task processed by a certain task processing platform. Continuous integration may be software development practice, i.e., team development members often integrate operations thereof, and at least one integration is generally executed by each member per day, which means that a plurality of integrations may occur per day. Each integration is verified by automated construction (which, for example, may include compiling, publishing and automated testing and the like), thereby finding an integration error as early as possible.

The submission information of the current test task may be specifically codes submitted for the current test task.

Specifically, the test task may be used for testing specific codes, to determine whether a directory corresponding to the dependent package in the codes is a directory corresponding to the dependent package used in the historical test task.

In the present embodiment, the test task may correspond to a set of codes, which is submitted by a person requesting testing by starting the test task. The codes corresponding to the test task can be used for constructing a model.

In the present embodiment, after submitting to-be-tested codes, a user may issue a test task creation instruction in a manner of clicking on a run button, start the test task, and extract sub-directories of the dependent package required for constructing a model from the to-be-tested codes submitted by the user based on a start operation or a start event of the test task, taking one or more of the sub-directories as the first sub-directory.

For example, the extracting the first sub-directory in which the dependent package required for constructing the model is located, based on the current test task may specifically include: acquiring codes based on the start operation of the test task, and extracting first sub-directory information from the codes, wherein the first sub-directory information is used for representing the first sub-directory.

In the present embodiment, the extracting the first sub-directory may specifically include: extracting unique information used for representing the first sub-directory, wherein the unique information may be not equivalent to the first sub-directory itself.

The dependent package may specifically include some tools, codes, data and the like that may be usually repeatedly used in model construction, such as a deep learning framework, a model transformation tool and a model visualization tool. The model in the present embodiment may be a machine learning model or a deep learning model. Therefore, the dependent package may specifically include some tools, codes, data and the like required for construction of the deep learning model, and may also include some tools, codes, data and the like required for construction of the machine learning model.

The models may specifically include the deep learning models, the machine learning models and the like. The deep learning models may be specifically convolutional neural network models, such as a visual geometry group (VGG) model, a GoogleNet (inception network) model, a residual net (ResNet) model, a region convolution neural net (R-CNN) model, a faster region convolution neural net (Faster-RCNN) model, a You Only Look Once (YOLO) model, and the like.

The first sub-directory may be one or more of a plurality of sub-directories that belong to a certain general directory. The first sub-directory may be specifically the general directory, a first-level sub-directory of the general directory, and a second-level sub-directory of the general directory. The above first-level sub-directory may correspond to a memory address of the dependent package required for the codes of the test task, and the general directory to which the above first-level sub-directory belongs may be a general address at which a plurality of and even a large quantity of dependent packages are stored.

The historical test task may be specifically a locally submitted test task, may be a test task submitted based on the same IP address, or may be a test task submitted by a terminal that has the same access permission on a certain local storage module.

In one implementation, the comparing the first sub-directory with the second sub-directory corresponding to the historical test task may specifically include: acquiring codes corresponding to the historical test task; and extracting the second sub-directory in the codes corresponding to the historical test task.

In one implementation, the comparing the first sub-directory with the second sub-directory corresponding to the historical test task may specifically include: acquiring the second sub-directory corresponding to the historical test task stored in a case where the historical test task is started by a user each time.

In one implementation, the comparing the first sub-directory with the second sub-directory corresponding to the historical test task may specifically include: comparing unique information corresponding to the first sub-directory with unique information corresponding to the second sub-directory.

The second sub-directory may be any one of sub-directories corresponding to the historical test task. For example, in a case where sub-directories corresponding to the current test task include sub-directories A, B and C, and sub-directories corresponding to the historical test task include sub-directories C, F, G and H, it can be known that a coincident sub-directory B exists, by comparing the sub-directories A, B and C with the sub-directories C, F, G and H.

In another implementation, to ensure confidentiality of the codes, all sub-directories corresponding to tasks may be converted to generate a conversion value, and the conversion value has a unique correspondence to all the sub-directories corresponding to the tasks. In a case where one of the plurality of sub-directories in the codes changes, the conversion value obtained by conversion also changes.

The first comparison result may be used for indicating a condition that the dependent package needs to be obtained from the local storage module, e.g., the first comparison result may be used for indicating that the dependent package has been stored in the local storage module. The local storage module may be a local memory or a locally configured database.

The local storage module may be a local module used for storing the dependent package. Specifically, the local storage module may be a local terminal that runs the test task, or a local terminal for model construction. The local storage module and a dependent package storage library are information transmitting and receiving opposite ends, respectively.

After the dependent package is obtained, the method may further include: constructing a model according to the dependent package, wherein the constructed model may be a computer model such as a deep learning module or a machine learning model.

In the embodiments of the present disclosure, the first sub-directory corresponding to the present test task and the second sub-directory corresponding to the historical test task may be compared based on the test task, and the dependent package is obtained from the local storage module according to the comparison result, so that dependent package acquisition time can be decreased and the model construction speed can be increased.

In one implementation, the comparing the first sub-directory with the second sub-directory corresponding to the historical test task submitted by the user may include:
generating a first encrypted value of a message-digest algorithm (MD5) of the first sub-directory; and
comparing the first encrypted value with a second encrypted value of the message-digest algorithm of the second sub-directory.

In the present embodiment, after the first sub-directory in which the dependent package required for constructing the model is located is extracted, the method may include:
generating the second encrypted value of the message-digest algorithm according to the second sub-directory; and
comparing the first encrypted value with the second encrypted value.

In the present embodiment, the comparing the first encrypted value with the second encrypted value of the message-digest algorithm of the second sub-directory may specifically include:
acquiring a pre-generated second encrypted value; and
comparing the first encrypted value with the second encrypted value.

In a case where the first encrypted value is equal to the second encrypted value, it can be determined that the first sub-directory is as same as the second sub-directory.

Illustratively, the message-digest algorithm may be a cryptographic hash function that is widely used, and may generate a 128-bit hash value (a 16-byte or 32-bit numerical value), for ensuring complete and consistent information transmission.

In addition, the first encrypted value and the second encrypted value may be calculated by other encryption algorithms.

In the present embodiment, at least one of the first encrypted value and the second encrypted value may be an encrypted value of a single sub-directory, or may be an encrypted value of the total sub-directories in the codes.

In the present embodiment, the first encrypted value of the first sub-directory and the second encrypted value of the second sub-directory are calculated by the message-digest algorithm, so that the comparison result can reflect real differences and similarities of the first sub-directory and the second sub-directory without disclosing specific code contents.

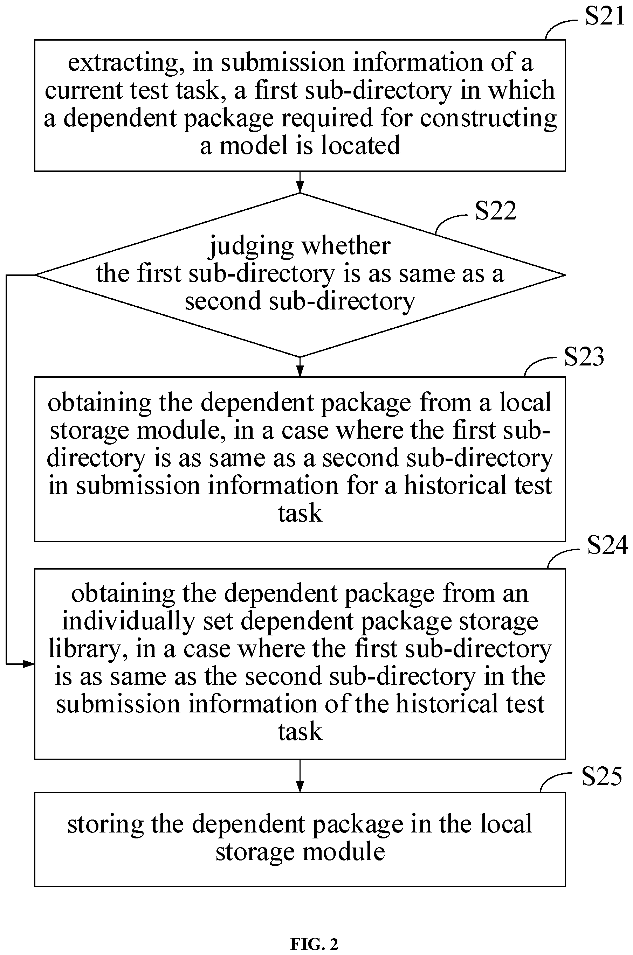

In one implementation, as shown in FIG. 2, the data processing method may include:
S21: extracting, in submission information of a current test task, a first sub-directory in which a dependent package required for constructing a model is located;
S22: judging whether the first sub-directory is as same as a second sub-directory;
S23: obtaining the dependent package from a local storage module, in a case where the first sub-directory is as same as a second sub-directory in submission information for a historical test task;
S24: obtaining the dependent package from an individually set dependent package storage library, in a case where the first sub-directory is as same as the second sub-directory in the submission information of the historical test task; and
S25: storing the dependent package in the local storage module.

The dependent package storage library may be an open data storage library. A constructor may automatically construct an address of the dependent package storage library and a corresponding acquisition rule of the dependent package.

For example, the constructor of the dependent package storage library may obtain a dependent package in the sub-directory, according to a corresponding sub-directory.

For another example, the constructor of the dependent package storage library may set one part of sub-directories in the general directory as open sub-directories, and set the other part of the sub-directories as sub-directories that can be accessed merely by a special permission party.

In a case where the first sub-directory is different from the second sub-directory, it may be considered that, a dependent package needing to be used in the present test task is not used in the codes corresponding to the historical test task, thus the dependent package needed in the codes of the present test task may be obtained from the dependent package storage library.

The storing the dependent package in the local storage module may specifically include: storing the dependent package in at least one of a local cache, a local memory and a local corresponding storage database.

In the present embodiment, in a case where it is determined that one or more dependent packages needed in the present test task do not exist locally, the dependent package is acquired from the dependent package storage library, and the dependent package acquired from the dependent package storage library is stored in the local storage module, so that the dependent package required for the codes corresponding to the present test task can be smoothly acquired. Moreover, in a case where the same dependent package is needed next time, the dependent package can be acquired from the local storage module, thereby decreasing average time of constructing a model by codes of a subsequent test task.

In one implementation, the obtaining the dependent package from the individually set dependent package storage library, in a case where the first sub-directory is as same as the second sub-directory in the submission information of the historical test task may include:
acquiring a total encrypted value of the message-digest algorithm of a general directory of the dependent package storage library; and
obtaining the dependent package from the general directory of the dependent package storage library, in a case where the total encrypted value is equal to the first encrypted value.

In a case where the total encrypted value is equal to the first encrypted value, it can be indicated that the dependent package is stored in the dependent package storage library.

The total encrypted value may be calculated according to the sub-directories corresponding to all dependent packages in the dependent package storage library.

The total encrypted value may be automatically updated in a case where the dependent package in the dependent package storage library is changed, wherein changing situations may include change of a dependent package, increase of dependent packages, decrease of dependent packages and the like.

The total encrypted value may be obtained by calculation, in a case where the total encrypted value needs to be compared with the first encrypted value each time.

In the present embodiment, the total encrypted value calculated according to the message-digest algorithm of the general directory of the dependent package storage library is compared with the first encrypted value, to determine whether the dependent package required for the codes corresponding to the present test task is stored in the dependent package storage library, so that arbitrary disclosure of directory information can be avoided, while ensuring accuracy of the comparison result.

In one implementation, the data processing method may further include:
obtaining compiling information, in a case where the total encrypted value is not equal to the first encrypted value; and
obtaining the dependent package according to the compiling information.

That the total encrypted value is not equal to the first encrypted value may indicate that the dependent package required for the present test task does not exist in the dependent package storage library. With respect to specific situations of the needed dependent package, the dependent package may be written or compiled.

In a case where the needed dependent package is obtained by whole writing, a newly written dependent package is generated according to received input information. In a case where the needed dependent package is obtained by compiling existing data packets, a new dependent package is generated according to received compiling information.

It should be understood that, in an ordinary way, a dependent package is stored in a local storage module, e.g., a local memory, after completely compiled or written, and the dependent package may be subsequently transmitted to a local corresponding storage library through the local memory, for storage.

In the present embodiment, in a case where the dependent package required for the codes corresponding to the present test task does not exist in the dependent package storage library, an operator is allowed to compile the dependent package, and the dependent package is generated according to the received compiling information, so that a subsequent model construction process can be smoothly conducted.

In one implementation, the data processing method may further include:
storing the dependent package obtained according to the compiling information, in the dependent package storage library.

In the present embodiment, the dependent package that does not exist in the dependent package storage library is compiled and generated according to the received compiling information, and then is stored in the dependent package storage library, so that the dependent package can be directly acquired from the dependent package storage library in a case where other terminals need to use the dependent package subsequently, without needing to be compiled again, thereby increasing the overall efficiency of model construction.

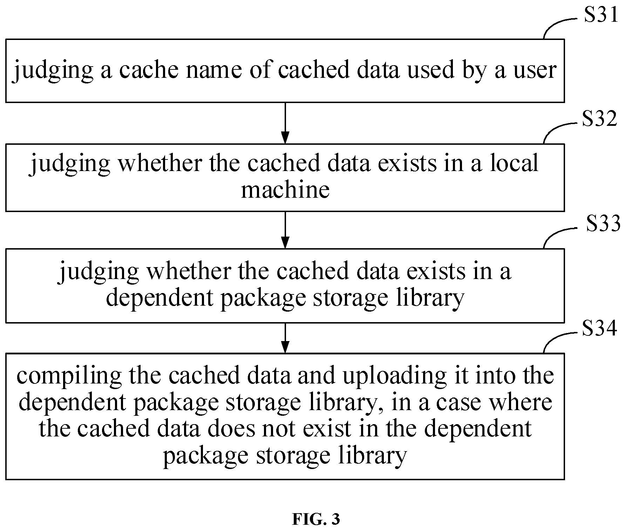

In one example of the present disclosure, the data processing method may include operations shown as FIG. 3:
S31: judging a cache name of cached data used by a user.

In the present operation, the cached data is equivalent to the dependent package in the above embodiments. After a user submits a request to Github, a relative continuous integration (CI) task will be automatically triggered. In the task, all files in a cache directory are encrypted by the md5 encryption algorithm according to a file directory in codes corresponding to the request of the user, which needs to be cached, and an encrypted value will be generated after encryption, for being defined as the cache name of the cached data.

The Github may be a hosting platform oriented at open source and private software projects, for hosting of a repository format by Git. Further, the Github may be an open-source distributed version control system, and can effectively conduct version management of very small to very large projects at a high speed.

In the present example, all dependent packages compiled by a third-party library are put in one directory, i.e., all the dependent packages may be stored in a directory cmake/external/xxx1.cmake, xxx2.cmake. Thus, in a case where any file compiled by the third-party library is modified, the md5 value of the directory cmake/external/ is changed. The dependent package compiled by the third-party library may be equivalent to the dependent package in the dependent package storage library in the above respective embodiments.

S32: judging whether the cached data exists in a local machine.

Whether the cached data exists in the present local machine is judged according to the cache name of the cached data obtained in the first operation. In a case where the cached data does not exist in the local machine, the cached data is acquired from the dependent package storage library.

S33: judging whether the cached data exists in a dependent package storage library.

In a case where the cached data exists in the dependent package storage library, the cached data is downloaded from the dependent package storage library and is cached on the local machine. In this way, in a case where a task is executed next time, the cached data does not need to be acquired from the dependent package storage library, thereby saving task execution time.

S34: compiling the cached data and uploading it into the dependent package storage library, in a case where the cached data does not exist in the dependent package storage library.

The cached data will be stored on the local machine after the compiling is successful, and uploaded into the dependent package storage library, and cached data required for other tasks may be downloaded in the dependent package storage library.

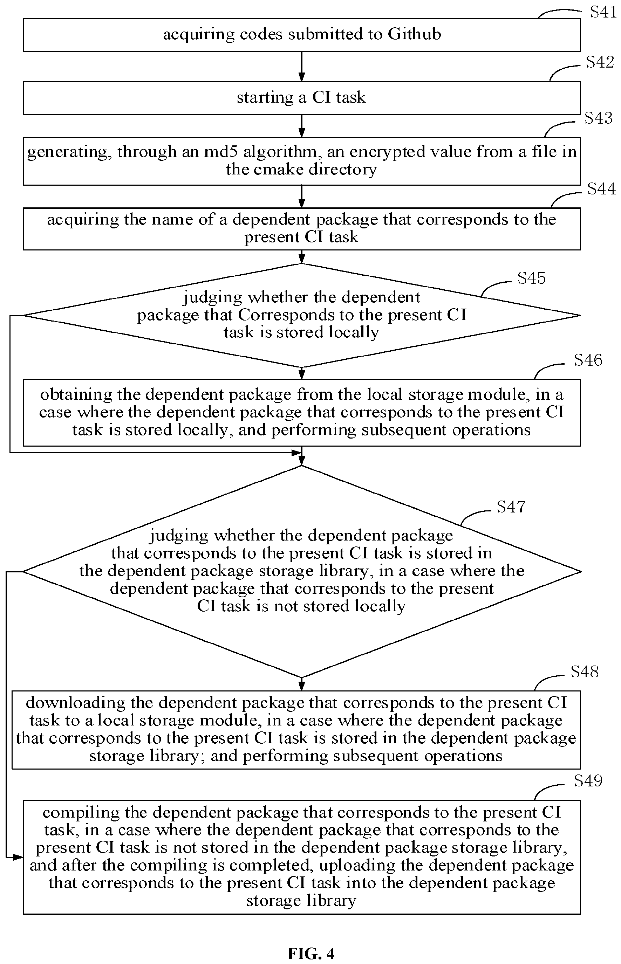

In one example of the present disclosure, the data processing method may include operations shown as FIG. 4:
S41: acquiring codes submitted to Github.
S42: starting a CI task.
S43: generating, through an md5 algorithm, an encrypted value from a file in the cmake directory.

That the encrypted value is the cmake directory may be used for storing a dependent package, and may be a directory of the dependent package storage library. The encrypted value may be generated according to the name of a file in the cmake directory.

S44: acquiring the name of a dependent package corresponding to the present CI task.

S45: judging whether the dependent package corresponding to the present CI task is stored locally.

S46: obtaining the dependent package from the local storage module, in a case where the dependent package corresponding to the present CI task is stored locally, and performing subsequent operations.

S47: judging whether the dependent package corresponding to the present CI task is stored in the dependent package storage library, in a case where the dependent package corresponding to the present CI task is not stored locally.

S48: downloading the dependent package corresponding to the present CI task to a local storage module, in a case where the dependent package corresponding to the present CI task is stored in the dependent package storage library, and performing subsequent operations.

S49: compiling the dependent package corresponding to the present CI task, in a case where the dependent package corresponding to the present CI task is not stored in the dependent package storage library, and after the compiling is completed, uploading the dependent package corresponding to the present CI task into the dependent package storage library.

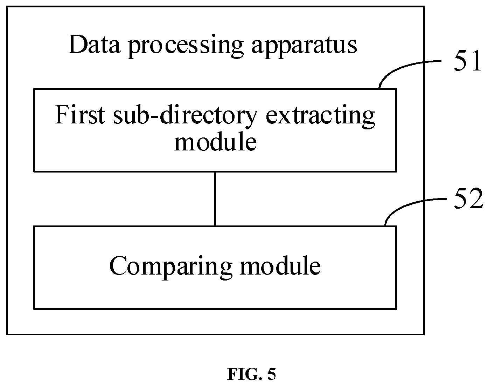

An embodiment of the present disclosure further provides a data processing apparatus. As shown in FIG. 5, the data processing apparatus may include:
a first sub-directory extracting module 51 configured for extracting, in submission information of a current test task, a first sub-directory in which a dependent package required for constructing a model is located; and
a comparing module 52 configured for obtaining the dependent package from a local storage module, based on a first comparison result, wherein the first comparison result is that the first sub-directory is as same as a second sub-directory.

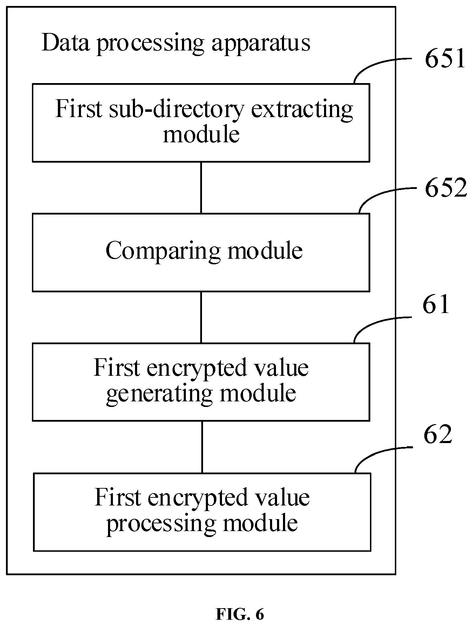

In one implementation, as shown in FIG. 6, the data processing apparatus may include:
a first encrypted value generating module 61 configured for generating a first encrypted value of a message-digest algorithm (MD5) of the first sub-directory; and
a first encrypted value processing module 62 configured for comparing the first encrypted value with a second encrypted value of the message-digest algorithm of the second sub-directory.

A first sub-directory extracting module 651 and a comparing module 652 shown in FIG. 6 are modules same as or similar to the first sub-directory extracting module 51 and the comparing module 52 shown in FIG. 5, respectively.

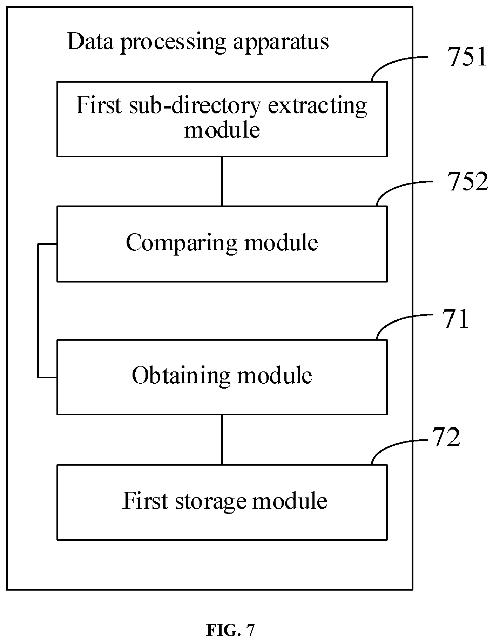

In one implementation, as shown in FIG. 7, the data processing apparatus may further include:
an obtaining module 71 configured for obtaining a dependent package from a dependent package storage library based on a second comparison result, wherein the second comparison result is that the first sub-directory is different from the second sub-directory; and
a first storage module 72 configured for storing the dependent package in the local storage module.

A first sub-directory extracting module 751 and a comparing module 752 shown in FIG. 7 are modules same as or similar to the first sub-directory extracting module 51 and the comparing module 52 shown in FIG. 5 or the first sub-directory extracting module 651 and the comparing module 652 shown in FIG. 6, respectively.

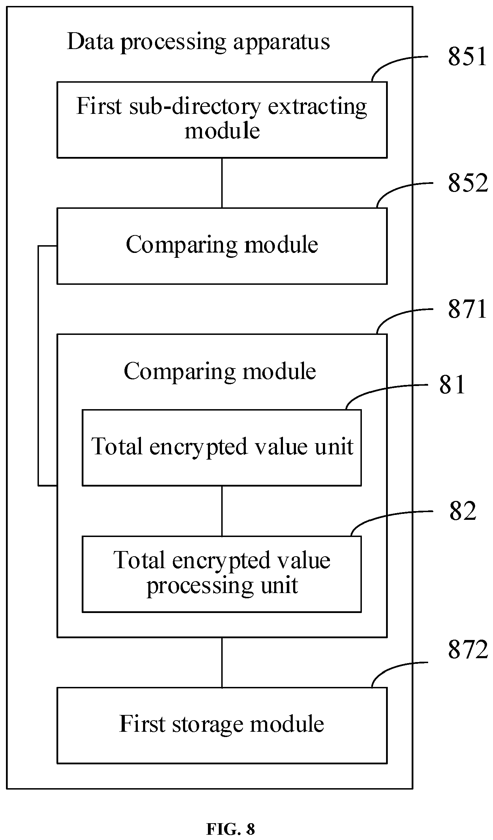

In one implementation, as shown in FIG. 8, the obtaining module 871 may include:
a total encrypted value unit 81 configured for acquiring a total encrypted value of the message-digest algorithm of a general directory of the dependent package storage library; and
a total encrypted value processing unit 82 configured for obtaining the dependent package from the general directory of the dependent package storage library, in a case where the total encrypted value is equal to the first encrypted value.

A first sub-directory extracting module 851, a comparing module 852, the obtaining module 871 and a first storage module 872 shown in FIG. 8 are modules same as or similar to the first sub-directory extracting module 751, the comparing module 752, the obtaining module 71 and the first storage module 72 shown in FIG. 7, respectively.

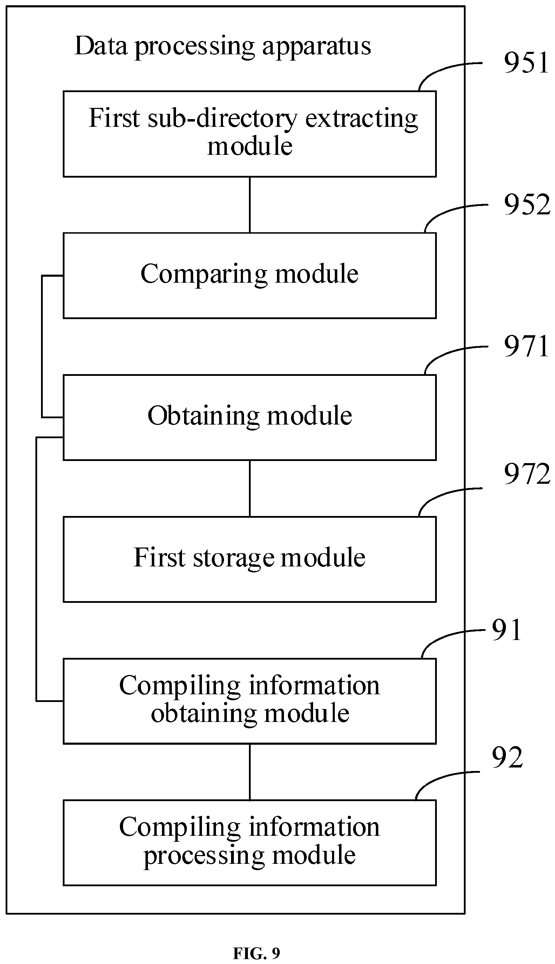

In one implementation, as shown in FIG. 9, the data processing apparatus may further include:
a compiling information obtaining module 91 configured for obtaining compiling information, in a case where the total encrypted value is not equal to the first encrypted value; and
a compiling information processing module 92 configured for obtaining the dependent package according to the compiling information.

A first sub-directory extracting module 951, a comparing module 952, an obtaining module 971 and a first storage module 972 shown in FIG. 9 are modules same as or similar to the first sub-directory extracting module 751, the comparing module 752, the obtaining module 71 and the first storage module 72 shown in FIG. 7 or the first sub-directory extracting module 851, the comparing module 852, the obtaining module 871 and the first storage module 872 shown in FIG. 8, respectively.

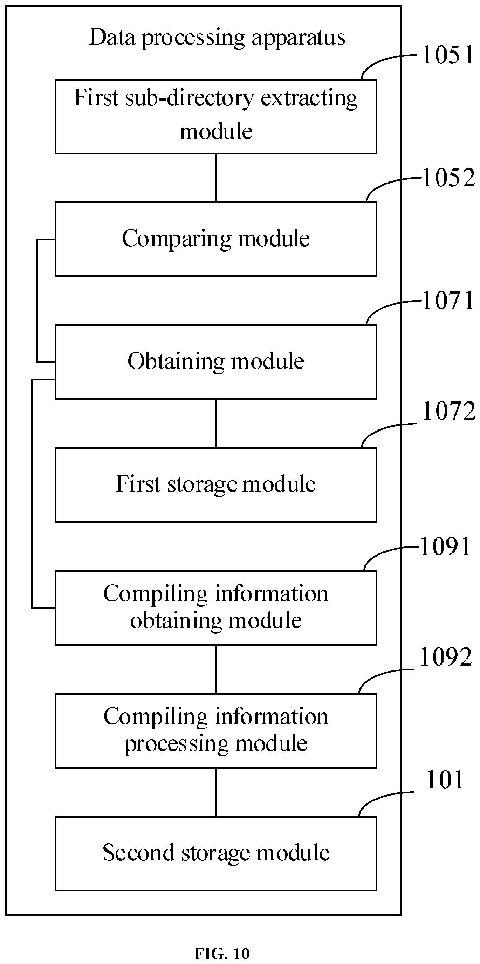

In one implementation, as shown in FIG. 10, the data processing apparatus may further include:
a second storage module 101 configured for storing the dependent package obtained according to the compiling information, in the dependent package storage library.

A first sub-directory extracting module 1051, a comparing module 1052, an obtaining module 1071, a first storage module 1072, a compiling information obtaining module 1091 and a compiling information processing module 1092 shown in FIG. 10 are modules same as or similar to the first sub-directory extracting module 951, the comparing module 952, the obtaining module 971, the first storage module 972, the compiling information obtaining module 91 and the compiling information processing module 92 shown in FIG. 9, respectively.

Functions of the respective units, modules or sub-modules in the respective data processing apparatuses in the embodiments of the present disclosure may refer to the corresponding descriptions in the above data processing methods, and are not repeatedly described herein.

The embodiments of the present disclosure may be applied to the field of artificial intelligence such as deep learning, big data and the like.

According to embodiments of the present disclosure, the present disclosure further provides an electronic device, a readable storage medium and a computer program product.

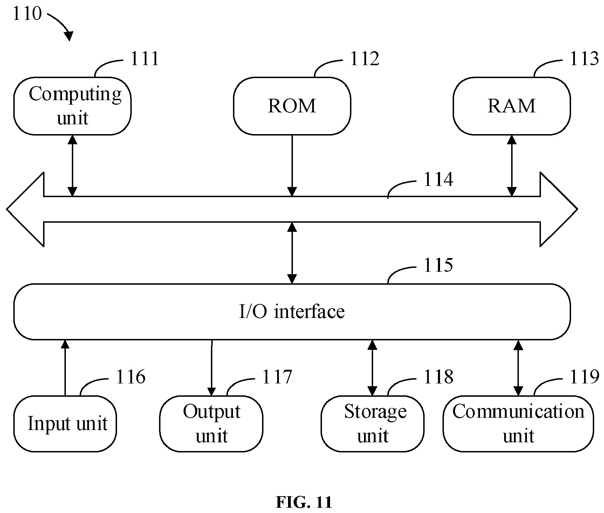

FIG. 11 shows a schematic block diagram of an example electronic device 110 that may be used to implement embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the present disclosure described and/or claimed herein.

As shown in FIG. 11, the electronic device 110 includes a computing unit 111 that may perform various suitable actions and processes in accordance with computer programs stored in a read only memory (ROM) 112 or computer programs loaded from a storage unit 118 into a random access memory (RAM) 113. In the RAM 113, various programs and data required for the operation of the electronic device 110 may also be stored. The computing unit 111, the ROM 112 and the RAM 113 are connected to each other through a bus 114. An input/output (I/O) interface 115 is also connected to the bus 114.

A plurality of components in the electronic device 110 are connected to the I/O interface 115, including: an input unit 116, such as a keyboard, a mouse, etc.; an output unit 117, such as various types of displays, speakers, etc.; a storage unit 118, such as a magnetic disk, an optical disk, etc.; and a communication unit 119, such as a network card, a modem, a wireless communication transceiver, etc. The communication unit 119 allows the electronic device 110 to exchange information/data with other devices over a computer network, such as the Internet, and/or various telecommunications networks.

The computing unit 111 may be various general purpose and/or special purpose processing assemblies having processing and computing capabilities. Some examples of the computing unit 111 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 111 performs various methods and processes described above, such as the above data processing method. For example, in some embodiments, the above data processing method may be implemented as computer software programs that are physically contained in a machine-readable medium, such as the storage unit 118. In some embodiments, some or all of the computer programs may be loaded into and/or installed on the electronic device 110 via the ROM 112 and/or the communication unit 119. In a case where the computer programs are loaded into the RAM 113 and executed by the computing unit 111, one or more of steps of the above data processing method may be performed. Alternatively, in other embodiments, the computing unit 111 may be configured to perform the above data processing method in any other suitable manner (e.g., by means of a firmware).

Various embodiments of the systems and techniques described herein above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

The program codes for implementing the methods of the present disclosure may be written in any combination of one or more programming languages. These program codes may be provided to a processor or controller of a general purpose computer, a special purpose computer, or other programmable data processing apparatus such that the program codes, when executed by the processor or controller, enable the functions/operations specified in the flowchart and/or the block diagram to be performed. The program codes may be executed entirely on a machine, partly on a machine, partly on a machine as a stand-alone software package and partly on a remote machine, or entirely on a remote machine or server.

In the context of the present disclosure, the machine-readable medium may be a tangible medium that may contain or store programs for using by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include one or more wire-based electrical connection, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other.

It should be understood that the steps can be reordered, added or deleted using the various flows illustrated above. For example, the steps described in the present disclosure may be performed concurrently, sequentially or in a different order, so long as the desired results of the technical solutions disclosed in the present disclosure can be achieved, and there is no limitation herein.

The above-described specific embodiments do not limit the scope of the present disclosure. It will be apparent to those skilled in the art that various modifications, combinations, sub-combinations and substitutions are possible, depending on design requirements and other factors. Any modifications, equivalent substitutions, and improvements within the spirit and principles of the present disclosure are intended to be included within the scope of the present disclosure.

## Claims

1. A data processing method, comprising:
extracting (S11), in submission information of a current test task, a first sub-directory in which a dependent package required for constructing a model is located; and
obtaining (S12) the dependent package from a local storage module, in a case where the first sub-directory is as same as a second sub-directory in submission information for a historical test task.

2. The method of claim 1, wherein, after extracting the first sub-directory in which the dependent package required for constructing the model is located, the method comprises:
generating a first encrypted value of a message-digest algorithm of the first sub-directory; and
comparing the first encrypted value with a second encrypted value of the message-digest algorithm of the second sub-directory.

3. The method of claim 1 or 2, further comprising:
obtaining (S24) the dependent package from an individually set dependent package storage library, in a case where the first sub-directory is as same as the second sub-directory in the submission information of the historical test task; and
storing (S25) the dependent package in the local storage module.

4. The method of claim 3, wherein the obtaining the dependent package from the individually set dependent package storage library, in the case where the first sub-directory is as same as the second sub-directory in the submission information of the historical test task, comprises:
acquiring a total encrypted value of the message-digest algorithm of a general directory of the dependent package storage library; and
obtaining the dependent package from the general directory of the dependent package storage library, in a case where the total encrypted value is equal to the first encrypted value.

5. The method of claim 4, further comprising:
obtaining compiling information, in a case where the total encrypted value is not equal to the first encrypted value; and
obtaining the dependent package according to the compiling information.

6. The method of claim 5, further comprising:
storing the dependent package obtained according to the compiling information, in the dependent package storage library.

7. A data processing apparatus, comprising:
a first sub-directory extracting module (51) configured for extracting, in submission information of a current test task, a first sub-directory in which a dependent package required for constructing a model is located; and
a first obtaining module configured for obtaining the dependent package from a local storage module, based on a first comparison result, wherein the first comparison result is that the first sub-directory is as same as a second sub-directory.

8. The apparatus of claim 7, comprising:
a first encrypted value generating module (61) configured for generating a first encrypted value of a message-digest algorithm of the first sub-directory; and
a first encrypted value processing module (62) configured for comparing the first encrypted value with a second encrypted value of the message-digest algorithm of the second sub-directory.

9. The apparatus of claim 7 or 8, further comprising:
an obtaining module (71, 871) configured for obtaining the dependent package from an individually set dependent package storage library, in a case where the first sub-directory is as same as the second sub-directory in the submission information of the historical test task; and
a first storage module (72) configured for storing the dependent package in the local storage module.

10. The apparatus of claim 9, wherein the obtaining module (871) comprises:
a total encrypted value unit (81) configured for acquiring a total encrypted value of the message-digest algorithm of a general directory of the dependent package storage library; and
a total encrypted value processing unit (82) configured for obtaining the dependent package from the general directory of the dependent package storage library, in a case where the total encrypted value is equal to the first encrypted value.

11. The apparatus of claim 10, further comprising:
a compiling information obtaining module (91) configured for obtaining compiling information, in a case where the total encrypted value is not equal to the first encrypted value; and
a compiling information processing module (92) configured for obtaining the dependent package according to the compiling information.

12. The apparatus of claim 11, further comprising:
a second storage module (101) configured for storing the dependent package obtained according to the compiling information, in the dependent package storage library.

13. An electronic device, comprising:
at least one processor; and
a memory communicatively connected with the at least one processor, wherein
the memory stores instructions executable by the at least one processor, the instructions being executed by the at least one processor to enable the at least one processor to perform the method of any one of claims 1 to 6.

14. A non-transitory computer-readable storage medium storing computer instructions for enabling a computer to perform the method of any one of claims 1 to 6.

15. A computer program product comprising computer instructions which, when executed by a processor, cause the processor to perform the method of any one of claims 1 to 6.
